Europäisches Patentamt

European Patent Office

Office européen des brevets

(19)

(11) Publication number: **0 333 672**
**A1**

## (12) EUROPEAN PATENT APPLICATION

(21) Application number: **89830116.3**

(22) Date of filing: **15.03.89**

(51) Int. Cl.⁴: **A 61 C 17/04**
**C 02 F 1/52**

(30) Priority: **18.03.88 IT 338288**

(43) Date of publication of application:
**20.09.89 Bulletin 89/38**

(84) Designated Contracting States:
**CH DE ES FR GB GR LI SE**

(71) Applicant: **CASTELLINI S.p.A.**
**Via Saliceto, 22**
**I-40013 Castelmaggiore (Bologna) (IT)**

(72) Inventor: **Lenzi, Plinio Maria**
**Via Leonello Spada, 47**
**I-40129 Bologna (IT)**

(74) Representative: **Lanzoni, Luciano**
**c/o BUGNION S.p.A. Via Farini, 37**
**I-40124 Bologna (IT)**

(54) **A slow-dissolving solid product formulated from substances capable of precipitating pollutants in the waste liquids discharged from dental surgery equipment.**

(57) The product is a slow-dissolving solid packaged as a tablet (12) and formulated to include a disinfectant, say, a phenol, and a substance capable of forming an insoluble precipitate with pollutant chemicals, and in particular with mercury, dissolved in the waste liquid (13); the formulation may also include substances capable of enhancing or accelerating the chemical reaction, and coloring agents designed to indicate the quantity of precipitant remaining in the tablet by occasioning a proportional variation in shade.

Bundesdruckerei Berlin

EP 0 333 672 A1

## Description

## A slow-dissolving solid product formulated from substances capable of precipitating pollutants in the waste liquids discharged from dental surgery equipment

The present invention relates to a slow-dissolving solid product, formulated from disinfectant and precipitant substances, for treatment of the waste liquids discharged from medical surgery equipment, in particular dental surgery equipment.

Hygiene constitutes a fundamental requirement in preventing numerous diseases, some of which highly dangerous as in the case of Hepatitis B, and takes on particular importance in the medical surgery. In effect, hygiene becomes an absolute necessity by reason of the fact that the medical practitioner operates on certain key routes of infection, such as open wounds, the oral cavity, etc...

Whilst extensive care is thus exercised in medical hygiene to the end of protecting persons operating and treated in the surgery, the surgery itself can often become a source of biological and chemical pollution in the external environment, caused by the materials employed in treatment and discharged from equipment. In dental surgery, for instance, use is made of amalgams, i.e. mercury blended with one or more metals, for the purpose of filling decayed teeth; once a tooth has been filled, the solidified amalgam must be shaped mechanically in order to match the contour of the original tooth, as near as possible.

The various steps of the filling operation are thus effected internally of the patient's mouth, with the dentist making use of power driven abrasive instruments connected up to a special stand, or pedestal. Particles shed by abrasion, together with saliva and with water sprayed from the instrument handpiece, are removed from the patient's mouth by suction, using cannulae and pump units, and/or spat out into the pedestal spittle bowl, and discharged ultimately through a waste outlet.

The main waste pipe from the equipment incorporates a trap, which is in receipt of all soiled liquids from the pedestal, including those from the spittle bowl and its water tap, and serves to separate the solid particles entrained in these liquids.

The trap consists in a receptacle with an inlet and outlet, both located at the top, and an internal funnel element positioned immediately upstream of the outlet in such a way as to create an inverted siphon capable of reducing the inlet velocity of the discharging liquid; solids are thus able to settle at the bottom of the receptacle, and can be removed periodically when the trap is serviced.

By contrast, certain lighter pollutant particles, and those of infinitely small dimensions, neither separate nor settle in the receptacle, but pass straight through into the main drain without being in any way recovered or neutralized; a notable case in point is that of the amalgam fillings mentioned above, mercury from which remains dissolved in the discharging water in the form of ions.

In effect, mercury is not easily soluble in water, i.e. $0.28\mu M/1$, which corresponds to a concentration of $56.1652 \times 10^{-6}$; nonetheless, this figure is at least ten times the acknowledged limit (Italy) for sewage, namely $5 \times 10^{-6}$.

The serious aspect of such a situation is that, for the most part, dental surgeries are privately owned and located in residential premises where there are no waste purification systems installed.

Accordingly, the object of the invention is to provide a product that will destroy and eliminate, or at all events, bring about a drastic reduction in the quantity of pollutant substances carried in waste liquids discharged from surgery equipment. The stated object is achieved according to the present invention by adoption of a slow-dissolving product, packaged in tablet form, that incorporates a disinfectant substance, and a substance designed to react and form an insoluble precipitate with the pollutants dissolved in waste liquids.

A first advantage of the invention is that it sets forth an expedient which is practical and reliable in use; it suffices, in fact, merely to position a tablet inside or immediately upstream of the trap device to which the waste pipes of medical surgery equipment are generally connected, in order to obtain a net improvement of pollution levels in the waste liquids discharged from the equipment.

Another advantage of the invention is that of its low cost; no special devices are needed for the tablet, which can be used in any waste pipeline that incorporates a trap or other similar siphon device.

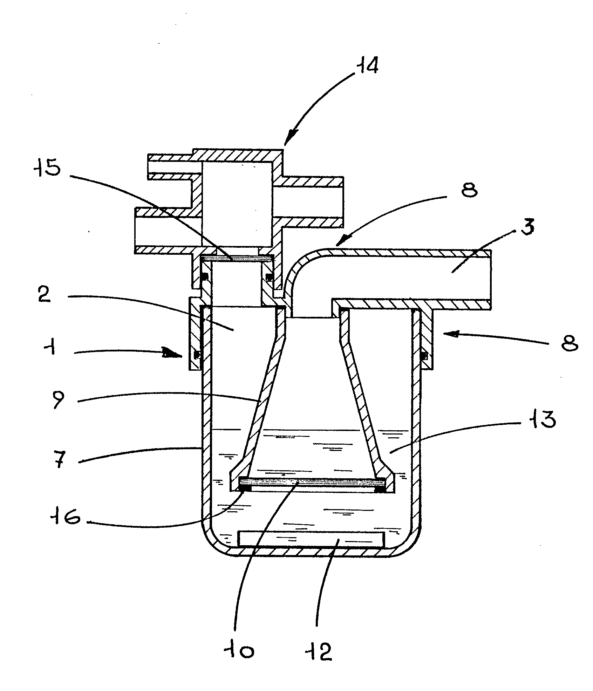

The invention will now be described in detail, by way of example, with the aid of the accompanying drawing, which is a vertical section showing a waste trap device, and inside the trap, a tablet according to the invention.

With reference to the accompanying drawing, the trap device 1, generally associated with the waste pipelines from a dental surgery equipment pedestal or other appliance, consists in a bowl 7, capped by a top cover 8; the inlet 2 and the outlet 3 are incorporated into the cover 8, offset and coaxially aligned, respectively, with the bowl 7.

The inlet 2 connects externally of the bowl 7 with a multi-way fitting 14, attached to the cover 8, to which the single surgery equipment waste lines are connected.

In the event of the device according to the present invention being utilized in a dental surgery, the various waste lines from the equipment pedestal will be connected to this fitting 14, as also might be the basin used by the practitioner to wash his or her hands.

15 denotes a diaphragm type check valve associated with the inlet fitting 14, or with the port boss of the inlet 2, the purpose of which is to admit waste liquids 13 and entrained solids discharged from the various items of equipment, whilst preventing any possibility of their returning in the event of a blockage downstream.

The product according to the invention, denoted 12, is solid and slow-dissolving, embodied as a tablet or the like, and will be positioned to best effect at the bottom 11 of the bowl 7, in such a way as to remain exposed continuously to the stream of waste liquid 13.

The tablet 12 is formulated from a disinfectant substance, such as a chlorine-bearing agent, or a phenol, and a substance capable or releasing ions that react with the pollutant substances dissolved or suspended in the waste liquid 13 in such a way as to form insoluble precipitates, which will then settle or admit of filtration.

The settling precipitates are simply deposited at the bottom of the bowl 7, from where they can be removed when the trap 1 is serviced periodically. The inclusion of the disinfectant substance permits of destroying, or at least drastically reducing pathogenic microorganisms which would otherwise find a friendly environment in the organic matter discharged and profilerate uncontrolled. The waste pipeline is rendered more hygienic in this manner, and handling of the trap 1, in particular, emptying deposited matter and cleaning the bowl 7, is made safer for a person effecting servicing operations. Reference is made in the following description to the precipitation of mercury ions, given the use of mercury amalgam fillings in dentistry, though the application of the product disclosed is by no means limited to this field. Such a product can in fact be utilized for the treatment of other pollutants, with the sole difference that the reagent will not be among those mentioned below, but suited to the particular substance to be precipitated.

Among the known compounds of mercury, the sulphide HgS, for example, obtainable by bringing about a reaction between the Hg+ + mercury ion and the S--sulphide ion, is practically insoluble in water. Such a reaction can be induced by formulating the tablet 12 to include a soluble sulphide (alkaline or earth alkaline), in combination with solubility retarding substances.

Similarly, use might be made of a sulphide that is itself not readily soluble (FeS or MnS); this will shed the S-- ion gradually and continuously in the prescribed manner, resulting in an exchange that gives the HgS precipitate, and accordingly, an even lower solubility coefficient ($KsHgS = 3 \times 10^{-54}$ as against $KsFeS = 3 \times 10^{-19}$ or $KsMnS = 7 \times 10^{-16}$). The advantage in this instance is that of utilizing a relatively insoluble substance, the concentration of which is easier to control.

The option also exists of using an organic compound (e.g. thioacetamide) bearing the sulphide ion and capable of giving hydrogen sulphide in hydrolysis. An advantage of this type of substance is that it will form an insoluble precipitate with mercury, even without hydrolysis.

Whatever the particular instance, the rate at which the substances dissolve will clearly need to be limited so that the concentration of sulphide ions does not exceed 1 milligram per litre.

Colouring agents might also be used in formulating the tablet 12, so as to enable a visual inspection of its efficiency at periodic intervals; the colour shade could thus be made to alter in proportion to the quantity of the disinfectant and precipitant substances already dissolved in the waste liquid.

A preferred product will also comprise substances designed to catalyze the precipitating reaction, consisting, in the wider sense, in substances able to condition the chemical environment (acidity and concentration) of a reaction occurring in the waste liquid 13, thereby ensuring maximum effectiveness in precipitation of the mercury ions, and gradual, steady dissolution of all the active components.

Thus, assuming surgery equipment to be fitted with a trap device 1 as shown by way of example in the drawing, a tablet 12 is position internally of the bowl 7 in the manner described, i.e. in such a way as to remain permanently exposed to the stream of waste liquid 13.

Polluted liquids from the equipment enter the trap by way of the inlet 2, filling the bowl 7 and then rising through a funnel 9 toward the cover 8 to discharge ultimately via the outlet 3.

The velocity of the inlet flow is such that heavier solid particles will settle initially at the bottom of the bowl 7, whilst the tablet 12 is invested by the liquid passing into the funnel 9, and dissolves slowly as a result.

As the tablet 12 dissolves, both the disinfectant and the precipitant substances are released into the liquid 13, and the precipitant will react with the mercury dissolved in the liquid to form an insoluble precipitate. Following a certain period, deposits will begin to appear at the bottom 11 of the bowl 7, whereupon the bowl can be separated easily from the cover 8 and cleaned. Similarly, to replace the tablet 12 when completely dissolved, it suffices simply to remove the bowl 7.

## Claims

1) A product for the treatment of polluted waste liquids discharged from dental surgery equipment, characterized
in that it is formulated to include at least one substance capable of reacting with pollutant chemicals dissolved in the waste liquid (13), to the end of forming insoluble precipitates that can either settle or be separated by filtration; and,
in that such a substance forms part of a solid, slow-dissolving product positioned internally or immediately upstream of means (1) for collection and removal of the precipitates in such a way as to be invested continuously by the flow of waste liquid.

2) A product for the treatment of polluted waste liquids discharged from dental surgery equipment, characterized
in that it is formulated to include at least one disinfectant substance, and at least one substance capable of reacting with pollutant chemicals dissolved in the waste liquid (13), to the end of forming insoluble precipitates that can either settle or be separated by filtration; and,
in that both such substances form part of a solid, slow-dissolving product positioned internally or immediately upstream of means (1) for collection and removal of the precipitates in such a way as to be invested continuously by the flow of waste liquid.

3) A product as in claim 1 or 2, wherein means for collection and removal of the precipitates consist in a water-tight trap device (1), connected to the waste pipelines from the equipment and enabling collection and periodic removal of deposits formed by heavier solid particles settling from the waste liquid.

4) A product as in claim 1 or 2, further comprising one or more substances designed to catalyze the chemical reaction occurring between the precipitant and the pollutants dissolved in the waste liquid.

5) A product as in claim 1 or 2, further comprising colouring agents designed to alter the colour shade of the product in proportion to the quantity of disinfectant and precipitant substances already dissolved in the waste liquid.

6) A product as in claim 1 or 2 able to precipitate mercury ions dissolved in the waste liquid (13) discharged from medical surgery equipment, wherein the precipitant consists in a salt of sulphur capable of producing sulphide ions that react with the mercury ions in solution to form insoluble salts of mercury.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 096 670 (LEIF ERNRYD AB) * Page 1, lines 1-4; page 7, line 12 - page 8, line 9 * | 1,6 | A 61 C 17/04 C 02 F 1/52 |
| Y | JAPANESE PATENTS GAZETTE, Part I-Chemical, Week X27, 11th August 1976, abstract no. J5 1057-687, Derwent Publications, London, GB; & JP-A-132 409 (TAKEDA CHEMICAL IND. K.K.) 15-11-1974 * Abstract * | 1,6 | |
| A | US-A-3 357 563 (AMERICAN MACHINE & FOUNDRY) * Column 6, claim 1 * | 1,2 | |
| A | US-A-4 350 666 (J.H. KLUTTS) * Columns 5,6; claims 1,8-11 * | 5 | |

TECHNICAL FIELDS SEARCHED (Int. Cl.4)

C 02 F
A 61 C

The present search report has been drawn up for all claims

| Place of search | Date of completion of the search | Examiner |
|---|---|---|
| THE HAGUE | 23-06-1989 | TEPLY J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)